(19) Europäisches Patentamt
European Patent Office
Office européen des brevets

(11) EP 4 364 903 A1

(12) EUROPÄISCHE PATENTANMELDUNG

(43) Veröffentlichungstag:
08.05.2024 Patentblatt 2024/19

(21) Anmeldenummer: 23206350.3

(22) Anmeldetag: 27.10.2023

(51) Internationale Patentklassifikation (IPC):
B25J 9/16 (2006.01)       G05B 19/404 (2006.01)

(52) Gemeinsame Patentklassifikation (CPC):
B25J 9/1638; B25J 9/1641; B25J 9/1664;
G05B 19/404; G05B 2219/37435;
G05B 2219/39186; G05B 2219/39195

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(30) Priorität: 07.11.2022  DE 102022129291

(71) Anmelder: Arburg GmbH + Co KG
72290 Loßburg (DE)

(72) Erfinder: SUHM, Patrick
77723 Gengenbach (DE)

(74) Vertreter: RPK Patenanwälte Reinhardt und
Kaufmann
Partnerschaft mbB (Pforzheim)
Grünstraße 1
75172 Pforzheim (DE)

(54) VERFAHREN ZUM BEWEGEN WENIGSTENS EINES ENDEFFEKTORS

(57) Bei einem Verfahren zum Bewegen wenigstens eines Endeffektors (19) eines Achsensystems (10) mit wenigstens einer Achse (12) und wenigstens einem Antrieb entlang wenigstens einer Trajektorie erfolgt eine Ermittlung und/oder Eingabe der Masse (18) des Endeffektors (19) sowie eine Ermittlung wenigstens einer Istposition (26) der Achse (12). Aus der Istposition (26) der Achse (12) und der Masse (18) des Endeffektors (19) wird wenigstens eine Eigenfrequenz (28) des Achsensystems (10) aus wenigstens einer Eigenfrequenzkenn- linie ermittelt. Weiter erfolgt eine Generierung wenigstens einer Sollpositionstrajektorie (32) der Achse (12) sowie eine Optimierung der wenigstens einen Sollpositionstrajektorie (32) mit der wenigstens einen Eigenfrequenz (28) des Achsensystems (10) in wenigstens eine optimierte Trajektorie (40) zur Bewegung des Antriebs entlang der wenigstens einen optimierten Trajektorie (40). Vorteilhaft ergibt sich so ein schnelles, schwingungsarmes, sicheres und verlässliches Verfahren zum Bewegen des Endeffektors (19).

Fig.2

EP 4 364 903 A1

**Beschreibung**

Die vorliegende Erfindung betrifft ein Verfahren zum Bewegen wenigstens eines Endeffektors, z.B. eines Greifers, einer Schweißeinheit oder eines sonstigen letzten Elements einer kinematischen Kette, eines Achsensystems nach dem Oberbegriff des Anspruches 1, eine Maschinensteuerung nach dem Oberbegriff des Anspruches 11 sowie ein Computerprogrammprodukt nach dem Oberbegriff des Anspruches 12.

Der Begriff "plastifizierbares Material", wie er in dieser Anmeldung verwendet wird, ist weit zu verstehen und umfasst insbesondere, aber nicht nur, neben Kunststoffen oder auch Silikon oder anderen thermoplastischen und/oder elastomeren Werkstoffen z.B. keramische, metallische und/oder pulverige Massen ebenso wie Papier, Cellulose, Stärke, Kork, usw. sowie auch Mischmaterialen zwischen derartigen plastifizierbaren Materialien. Grundsätzlich kann es sich dabei auch um bereits zuvor plastifizierte Materialien oder auch plastische Massen handeln, die nach dem Ausbringen selbsttätig oder unter Einsatz von Hilfsmitteln aushärten. Der Begriff umfasst auch Recyclate.

Unter einer "Achse" werden im Rahmen dieser Anmeldung bewegbare Teile z.B. von Maschinen, Anlagen, Anlagenteilen und/oder Peripheriegeräten verstanden, welche sich beispielsweise über einen Antrieb z.B. einen Motor ansteuern lassen. Beim und/oder zum Betrieb von Maschinen aller Art, z.B. von industriellen Maschinen, elektrischen Maschinen und/oder Formgebungsmaschinen können Achsen, zum Beispiel Tauch-, Positionier- oder Linearachsen vorgesehen sein, welche verschiedene Aufgaben übernehmen. Beispielsweise kann bei einer Maschine zur Handhabung und/oder Verarbeitung von plastifizierbaren Materialien, insbesondere einer Spritzgießmaschine oder einer Formgebungsmaschine, insbesondere zur Handhabung von Spritzteilen, eine Achse, zum Beispiel eine Tauch-, Positions- oder Linearachse vorgesehen sein. Beispielsweise kann mit der Achse das fertige Spritzteil aus der Spritzgussform entnommen werden. Zum Antrieb der Achse kann beispielsweise ein Riemenantrieb für eine translatorische Bewegung der Achse in eine Richtung verwendet werden.

Bei einem industriellen Prozess kommen Maschinen aller Art zum Einsatz, welche verschiedenste Aufgaben übernehmen. Wurde beispielsweise ein Bauteil gefertigt, so kann das Bauteil von einem Ort zu einem anderen Ort transportiert werden, z.B. zu einer Endablage, zu einer Packstation oder, um dort weiterverarbeitet zu werden. Beispielsweise werden in einem Spritzgießprozess Bauteile mittels einer Spritzgießmaschine hergestellt. Nach dem Einspritzprozess wird das Spritzgießwerkzeug geöffnet und das fertige Bauteil kann entnommen werden. Ebenfalls können Bauteile beispielsweise auch mit einer Formgebungsmaschine, z.B. einer 3D-Druck-Maschine hergestellt werden. Ist das Bauteil fertig kann es aus der 3D-Druck-Maschine entnommen werden. Dafür werden beispielsweise verschiedene Maschinen mit Achsensystem mit wenigstens einer Achse und wenigstens einem Antrieb, z.B. eine Pick-and-Place-Vorrichtung oder ein Linearroboter verwendet. Beispielsweise kann eine solche Pick-and-Place-Vorrichtung oder ein Linearroboter für eine Maschine zur Handhabung und/oder Verarbeitung plastifizierbarer Materialien, wie z.B. eine Spritzgießmaschine oder eine Formgebungsmaschine, vorgesehen sein.

Um eine Pick-and-Place-Aufgabe möglichst schnell durchzuführen, reicht es nicht alleine aus, die entsprechenden Achsen möglichst schnell zum Zielpunkt zu bewegen. Um die Bauteile präzise aufzunehmen und/oder abzulegen, darf der Endeffektor im Zielpunkt unter anderem nicht nachschwingen. Die Wartezeit bis zum hinreichenden Ausklingen der Endeffektorschwingung addiert sich folglich zur Bewegungszeit des Endeffektors entlang einer Trajektorie.

In der DE 10 2009 040 434 B4 ist ein Handlinggerät für eine Spritzgießmaschine mit aktiver Dämpfung offenbart, wobei für eine exakte und schnelle Positionierung bzw. eine geringe Zykluszeit Schwingungen des Handlinggeräts minimiert werden. Durch Berücksichtigung der elastischen Eigenschaften der beweglichen Komponente des Handlinggeräts, indem das elastische Verhalten mittels eines mathematischen Models beschrieben wird, und durch Abänderung bzw. Erzeugung der Sollbahn des Endstücks gemäß des Modells, werden die elastischen bzw. dynamischen Abweichungen der Position des Endstücks von der ursprünglich vorgegebenen Sollbahn verringert und die angeregten Schwingungen vermieden bzw. reduziert.

In der DE 10 2004 008 406 A1 ist ein Regel-/Steuerantrieb mit einer Ausgleichseinheit für mechanische Eigenschaften zum Dämpfen von Komponenten offenbart, die jeweils eine bestimmte Frequenz aufweisen und jeweils einer Eigenschaft einer anzutreibenden Zielmaschine entsprechen, welche in einem Positionsbefehlsignal enthalten sind. Das Positionsbefehlsignal wird durch eine FIR-Filtereinheit korrigiert, um Optimalwertsignale zu berechnen, die mit der Position, der Geschwindigkeit und dem Drehmoment der Zielmaschine zusammenhängen. Mit einer Rückkopplungsausgleichseinheit wird die Zielmaschine entsprechend den Optimalwertsignalen angetrieben. Die Ausgleichseinheit dämpft somit für mechanische Eigenschaften Komponenten, die jeweils eine vorbestimmte Frequenz aufweisen und jeweils einer Eigenschaft der anzutreibenden Zielmaschine entsprechen.

In der DE 10 2017 129 467 A1 ist ein Verfahren zum Betreiben eines mobilen Kommissionier-Roboters offenbart. Der Kommissionier-Roboter umfasst einen Roboterarm mit einem Aufnahmewerkzeug zur Aufnahme eines Objekts, wobei Schwingungen des Roboterarms durch Gegenschwingungen ausgeglichen werden, die in einem verstellbaren Abschnitt des Roboterarms im Bereich des Aufnahmewerkzeugs oder im Aufnahmewerkzeug erzeugt werden.

Die DE 10 2017 124 182 A1 offenbart eine Regeleinrichtung für ein Handlinggerät, wobei das Ende einer Wartephase beim Erreichen eines Grenzwertes von der Regeleinrichtung festlegbar ist. Die Wartephase ist einer Betätigung eines an einem End-of-Arm eines Handlingarms angebrachten End-of-Arm-Tools vorgelagert und dient dem Abklingen von Schwingungen des End-of-Arms. Über einen Eingang werden Signale eines dynamischen Parameters des End-Off-Arms erhalten und mit einem in einem Speichermedium hinterlegten Grenzwert verglichen, wobei im Speichermedium mehrere Ausschwingprofile des End-of-Arms hinterlegt sind.

Die DE 11 2017 003 961 B4 offenbart eine Steuerung für einen Parallelverbindungsmechanismus, wobei eine Antriebssteuereinheit zum Steuern eines Aktors vorgesehen ist, welcher den Parallelverbindungsmechanismus antreibt. Mit einer Eigenfrequenzvorhersageeinheit wird für jede Interpolationsposition eines Endeffektors unter Verwendung eines dynamischen Modells eine vorhergesagte Wertefolge einer Eigenfrequenz des Parallelverbindungsmechnismus berechnet, wobei ein Verbindungsgelenk des Parallelverbindungsmechanismus mithilfe einer Translationsfeder und das mechanische System vom Verbindungsgelenk zum Endeffektor mithilfe eines starren Körpers simuliert wird. Weiter umfasst die Antriebssteuereinheit einen Filter zum Verändern einer Frequenzkomponente, die jeweils für eine Interpolationsposition unterdrückt werden soll.

In der DE 10 2016 000 265 A1 ist eine Motorsteuervorrichtung zum Steuern eines Servomotors offenbart, wodurch eine elastische Deformation zwischen einem Servomotor und einer vom Servomotor angetriebenen Komponente kompensiert wird. Eine Servosteuereinheit steuert auf Basis eines Positionsbefehls nach der Kompensation eines kompensierten Positionsbefehls einen Motor, wobei der kompensierte Positionsbefehl mittels eines Kompensationsfilters erzeugt wird, welcher ein Filter enthält, welches Elemente der Filterkoeffizienten aufweist: eine träge Masse der angetretenen Komponente, einen Festigkeitskoeffizienten Keiner elastisch deformierbaren Komponente und einen Dämpfungskoeffizienten C der elastisch deformierbaren Komponente.

Die EP 0 931 283 B1 offenbart ein Verfahren zur Momentenvorsteuerung elastischer schwingungsfähiger Mehrmassensysteme. Mit einer Führungsgrößengenerierung werden Parameter zur Einprägung von Sollbewegungszuständen aus einem Führungsmodell zur Bewegungsführung abgeschätzt. Über einen Lastsollwertpfad wird ein axialer Lagersollwinkel eingeprägt und über einen Drehzahlvorsteuerpfad ein axialer Drehzahlsollwert und über einen Momentenvorsteuerpfad ein axialer Antriebsmomentsollwert. Weiter wird ein für Schwingungen ursächliches Federmoment aus dem Führungsmodell abgeleitet und durch eine Störgrößenaufschaltung auf den Momentenvorsteuerpfad kompensiert.

Die US 2014/0300411 A1 offenbart eine mechanische Schwingungsunterdrückungseinrichtung, wobei mit einer Schleife der Resonanzfaktor des Systems reduziert wird.

Ausgehend von diesem Stand der Technik liegt der vorliegenden Erfindung die Aufgabe zugrunde, ein vorteilhaft schnelles, schwingungsarmes, sicheres und verlässliches Verfahren zum Bewegen wenigstens eines Endeffektors eines Achsensystems mit wenigstens einer Achse und wenigstens einem Antrieb, z.B. einer Pick-and-Place-Vorrichtung oder eines Linearroboters, bevorzugt einer Pick-and-Place-Vorrichtung oder eines Linearroboters für eine Maschine zur Handhabung und/oder Verarbeitung plastifizierbarer Materialien, z.B. für eine Spritzgießmaschine oder für eine Formgebungsmaschine, zur Verfügung zu stellen.

Diese Aufgabe wird durch ein Verfahren zum Bewegen wenigstens eines Endeffektors eines Achsensystems mit den Merkmalen des Anspruches 1 sowie durch eine Maschinensteuerung mit den Merkmalen des Anspruches 11 sowie durch ein Computerprogrammprodukt mit den Merkmalen des Anspruches 12 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Das Verfahren zum Bewegen wenigstens eines Endeffektors, z.B. eines Greifers, eines Entnahmewerkzeugs, einer Schweißeinheit oder eines sonstigen vorzugsweise letzten Elements einer kinematischen Kette, eines Achsensystems mit wenigstens einer Achse und wenigstens einem Antrieb, z.B. einer Pick-and-Place-Vorrichtung oder eines Linearroboters, bevorzugt einer Pick-and-Place-Vorrichtung oder eines Linearroboters für eine Maschine zur Handhabung und/oder Verarbeitung plastifizierbarer Materialien, z.B. für eine Spritzgießmaschine oder für eine Formgebungsmaschine, weist die folgenden Schritte auf.

Es erfolgt eine Ermittlung und/oder eine Eingabe der Masse des Endeffektors. Beispielsweise kann die Masse des Endeffektors über ein User Interface eingegeben werden, beispielsweise in einer Maschinensteuerung, oder automatisch zur Verfügung gestellt werden, z.B. von einer Software. Die Endeffektormasse ändert sich beispielsweise während eines Spritzgießzyklus nur an wenigen Punkten, an welchen das Bauteil aufgenommen und/oder abgelegt wird. Zur Ermittlung der Masse des Endeffektors kann beispielsweise ein Masse-Ermittlungsverfahren auf Basis eines Achsenstroms der Achse verwendet werden, bei dem ein höherer Strom eine höhere Endeffektormasse darstellt. Prinzipiell können aber auch andere Verfahren zur Ermittlung der Endeffektormasse verwendet werden.

Weiter erfolgt eine Ermittlung wenigstens einer Istposition der wenigstens einen Achse, z.B. einer X-, Y- und/oder Z-Istposition. Die Ermittlung der Istposition der Achse kann beispielsweise über einen Umrichter des Achsensystems erfolgen. Aus den Daten des Umrichters kann die wenigstens eine Istposition der Achse ermittelt werden.

Aus der wenigstens einen Istposition der wenigstens einen Achse und der Masse des Endeffektors wird mittels wenigstens einer Eigenfrequenzkennlinie wenigstens eine Eigenfrequenz des Achsensystems bestimmt. Mit der Eigenfrequenzkennlinie kann, je nach Masse des Endeffektors und der entsprechenden Position, eine entsprechende Eigenfrequenz erhalten werden. Die Eigenfrequenzen können z.B. aus der Eigenfrequenzkennlinie abgelesen werden. Die Eigenfrequenzkennlinie kann z.B. in Experimenten am Achsensystem ermittelt werden indem für verschiedene Achs-Auslenkungen und verschiedene Massen die Periodendauer der Eigenschwingung notiert wird. Bevorzugt wird dabei lediglich die niedrigste Eigenschwingung betrachtet. Bevorzugt können auch die Periodendauern der Eigenschwingung in der Kennlinie abgelegt werden.

Weiter erfolgt eine Generierung wenigstens einer Sollpositionstrajektorie für die Bewegung des Endeffektors, z.B. eine X-, Y- und/oder Z-Sollpositionstrajektorie. Bevorzugt erfolgt die Generierung in einem Sollpositionsgenerator, welcher beispielsweise in einer Maschinensteuerung implementiert sein kann. Prinzipiell kann die Generierung der wenigstens einen Sollpositionstrajektorie für die Bewegung des Endeffektors aber auch auf sonstige Weise erfolgen, z. B. mit einer Software oder einem Programm.

Mit der wenigstens einen Eigenfrequenz des Achsensystems und der wenigstens einen Sollpositionstrajektorie für die Bewegung des Endeffektors, wird wenigstens eine Optimierung der wenigstens einen Sollpositionstrajektorie zur Bewegung des Antriebs entlang der wenigstens einen optimierten Trajektorie durchgeführt. Der Endeffektor wird somit entlang der Sollpositionstrajektorie und der Antrieb, z.B. ein Motor wird entlang der optimierten Trajektorie bewegt. Der Motor befindet sich so vorteilhaft zu jedem Zeitpunkt genau an der Position, welche die optimierte Trajektorie für diesen Zeitpunkt vorsieht. Vom Motor aus, wird die Bewegung über elastische Elemente bis zum Endeffektor transportiert. Durch die elastischen Verformungen bewegt sich jedes nachfolgende Teil leicht anders als der Motor, wobei sich insbesondere der Endeffektor bewegt entlang der Sollpositionstrajektorie bewegt, sofern sich der Motor entlang der optimierten Trajektorie bewegt.

Vorteilhaft ergibt sich so ein schnelles, schwingungsarmes, sicheres und verlässliches Verfahren zur Bewegung wenigstens eines Endeffektors eines Achsensystems.

Für verschiedene Kompensationsstrategien bzgl. des Nachschwingens des Endeffektors werden im Stand der Technik unterschiedliche Sensoren verwendet. Dies ist aufwändig und kostenintensiv. Weiter vorteilhaft für einen einfachen und verlässlichen Betrieb arbeitet das Verfahren bevorzugt sensorlos.

Da die Eigenfrequenzen mit der Endeffektormasse sowie der wenigstens einen Istposition der Achse variieren, kann bevorzugt die wenigstens eine Eigenfrequenzkennlinie hinterlegt werden. Beispielsweise kann die Eigenfrequenzkennlinie in einem Programm und/oder auf der Maschinensteuerung hinterlegt werden.

Vorteilhaft für eine einfache und handliche Beschreibung des Achsensystems wird bevorzugt das Achsensystem als ein lineares Feder-Masse-Dämpfer-System modelliert. Messdaten zeigen, dass damit die wesentlichen Freiheitsgrade des Achsensystems abgebildet werden können. Beispielsweise kann das Feder-Masse-Dämpfer-System über drei Differenzialgleichungen zweiter Ordnung abgebildet werden.

Für eine vorteilhaft einfache und schnelle Untersuchung der Systemeigenschaften des Achsensystems wird bevorzugt für eine Systemdarstellung wenigstens eine Zustandsraumdarstellung verwendet. Beispielsweise kann die Zustandsraumdarstellung über zwei Vektor-Gleichungen dargestellt werden. Weiter bevorzugt kann aus der Zustandsraumdarstellung eine Steuerbarkeitsmatrix abgeleitet werden.

Vorteilhaft für eine genaue und einfache Optimierung wird bevorzugt für die Optimierung der wenigstens einen Sollpositionstrajektorie wenigstens eine Zustandstransformation durchgeführt. So kann beispielsweise auf Regelungsnormalform transformiert werden. Die transformierten Zustände können eine Integratorkette bilden, wodurch sich vorteilhaft eine einfache Trajektorienplanung ergibt. Die Transformation kann beispielsweise über die letzte Zeile der inversen Steuerbarkeitsmatrix angegeben werden.

Bevorzugt werden die Koordinaten des Endeffektors in Koordinaten des Antriebs umgerechnet. Vorteilhaft ergibt sich so für eine gewünschte Endeffektor-Trajektorie direkt die benötigte Antriebs-Trajektorie. Diese Erkenntnis erlaubt es vorteilhaft hinreichend oft stetig differenzierbare Trajektorien für den Endeffektor zu planen und liefert die volle Kontrolle über das Schwingungsverhalten des Endeffektors, vorausgesetzt, die Antriebsdynamik ist ausreichend, um der optimierten Trajektorie folgen zu können.

Für eine vorteilhaft genaue Optimierung der Trajektorie bei Achsensystemen mit Riemenantrieb wird bevorzugt für die Optimierung der wenigstens einen Sollpositionstrajektorie wenigstens eine Riemendynamik des Antriebs berücksichtigt. Vorteilhaft ergibt sich so eine verlässliche Schwingungsunterdrückung.

Für eine vorteilhaft schwingungsfreie Bewegung des Endeffektors wird bevorzugt für das Achsensystem wenigstens ein Systemparameter ermittelt. Beispielsweise können die Parameter aus Datenblättern bekannt sein und/oder am Achsensystem in Versuchen ermittelt und beispielsweise in Kennlinien abgelegt oder online identifiziert werden. Als Systemparameter können beispielsweise die Periodendauer $T$ der Endeffektorschwingung und/oder die Periodendauer der Riemenschwingung in Betracht kommen.

Für ein vorteilhaft einfaches und kostengünstiges System werden bevorzugt für die Ermittlung der wenigstens einen Istposition der wenigstens einen Achse und/oder der Masse des Endeffektors Daten aus einem Umrichter des Achsensystems verwendet. Der Umrichter kann ein Teil des Antriebs sein. Er weist bevorzugt eine Sollposition von der Maschinensteuerung auf und erzeugt das magnetische Feld um den Motor, z.B. einen Elektromotor zur Sollposition zu bewegen. Weiter bevorzugt ändert die Maschinensteuerung die Sollposition nicht sprungförmig, sondern immer nur so stark, dass der Umrichter die Sollwertpositionsänderung innerhalb einer bestimmten Zeit, bevorzugt eines Steuerungstaktes umsetzen kann. Vorteilhaft sind so keine zusätzlichen Sensoren zur Bestimmung der Istposition und/oder der Masse des Endeffektors nötig.

Vorteilhaft für eine einfache und schnelle Ermittlung der Masse des Endeffektors wird bevorzugt die Masse des Endeffektors aus wenigstens einem Drehmoment der wenigstens einen Achse ermittelt. Das Drehmoment kann beispielweise aus einem Umrichter des Achsensystems bereitgestellt werden. Weiter vorteilhaft ergibt sich so, dass keine weiteren Sensoren zur Ermittlung der Masse des Endeffektors benötigt werden.

Auch wird die Aufgabe durch eine Maschinensteuerung gelöst, welche für eine schnelle, sichere und verlässliche Bewegung des Endeffektors eingerichtet, ausgeführt und/oder konstruiert ist, um das oben beschriebene Verfahren auszuführen.

Ebenfalls wird die Aufgabe durch ein Computerprogrammprodukt gelöst. Für eine schnelle, sichere und verlässliche Bewegung des Endeffektors ist das Computerprogrammprodukt mit einem Programmcode versehen, der auf einem computerlesbaren Medium gespeichert ist, zur Durchführung des oben beschriebenen Verfahrens.

Weitere Vorteile ergeben sich aus den Unteransprüchen und der nachfolgenden Beschreibung eines bevorzugten Ausführungsbeispiels. Die in den Patenansprüchen einzeln aufgeführten Merkmale sind in technologisch sinnvolle Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:

Fig.1      ein Achsensystem,
Fig.2      ein Blockdiagramm,
Fig.3      ein Feder-Masse-Dämpfer-System,
Fig.4 - 7    Diagramme.

Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

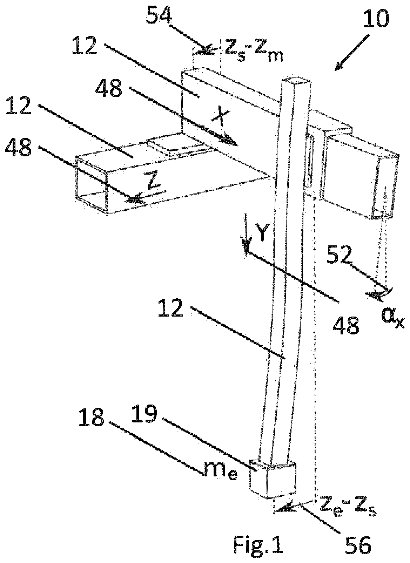

In einem Ausführungsbeispiel gemäß Fig. 1 ist ein Achsensystem 10, z.B. ein kartesisch gelagerter Linearroboter, z.B. für eine Spritzgießmaschine oder für eine Formgebungsmaschine, mit einem Endeffektor 19, z.B. einem Greifer, einem Entnahmewerkzeug oder einem sonstigen vorzugsweise letzten Element einer kinematischen Kette, mit einer entsprechenden Endeffektormasse 18 ($m_e$) dargestellt. Das Achsensystem 10 weist wenigstens eine Achse 12, im Ausführungsbeispiel in Fig.1 z.B. eine X-, eine Y- und eine Z-Achse, und wenigstens einen Antrieb, z.B. ein Motor oder ein Elektromotor (nicht dargestellt) auf. Der Antrieb kann jede Achse 12 entlang einer Richtung 48, bevorzugt stufenlos, hin- und herbewegen, z.B. entlang der Y-Richtung entsprechend nach oben und nach unten. Bevorzugt kann für jede Achse 12 auch ein separater Antrieb vorgesehen sein.

Der im Ausführungsbeispiel gemäß Figur 1 dargestellte kartesisch gelagerte Linearroboter besitzt pro Achse 12 einen Freiheitsgrad, falls die Struktur des Achsensystems 10 als starr angenommen wird. Am realen System können z.B. durch elastische Verformungen pro Achse 12 jedoch mehrere Freiheitsgrade existieren. Beschleunigt der Roboter z.B. in der Z-Richtung, so verursacht eine Torsion 52 um $\alpha_x$ sowie eine Biegung der X- und Y-Achse, eine Abweichung 56 ($z_e - z_s$) des Endeffektors 19 zwischen der Z-Schlittenposition (Index: s) und der Z-Endeffektorposition (Index: e). Die Achsen 12 können z.B. über einen Riemen (Index: r) angetrieben werden, wobei bevorzugt zwischen einer Antriebsträgheit und einer Schlittenträgheit unterschieden und die Riemendynamik berücksichtigt werden kann. Dadurch ergibt sich beispielsweise eine Abweichung 54 ($z_s - z_m$) zwischen der Z-Schlittenposition und der Z-Motorposition (Index: m) wenn der Roboter in Z-Richtung beschleunigt. Möglich ist auch, dass die Achsen 12 z.B. über eine Zahnstange angetrieben werden, wodurch sich $z_m$ und $z_s$ nicht unterscheiden.

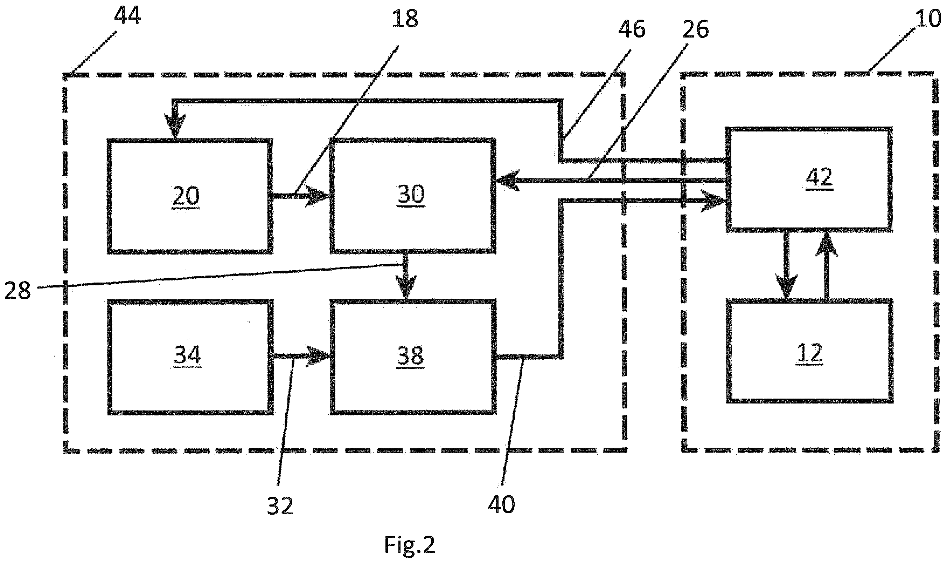

In Fig. 2 ist ein Blockdiagramm dargestellt, welches ein erfindungsgemäßes Verfahren zum schwingungsarmen Bewegen wenigstens eines Endeffektors 19 eines Achsensystems 10 mit wenigstens einer Achse 12 und wenigstens einem Antrieb, z.B. einer Pick-and-Place-Vorrichtung oder eines Linearroboters, bevorzugt einer Pick-and-Place-Vorrichtung oder eines Linearroboters für eine Maschine zur Handhabung und/oder Verarbeitung plastifizierbarer Materialien, z.B. für eine Spritzgießmaschine oder für eine Formgebungsmaschine, zeigt. Zunächst erfolgt in einer Masseermittlung/-eingabe 20 eine Ermittlung und/oder eine Eingabe der Masse 18 des Endeffektors 19. Beispielsweise kann die Masse 18 des Endeffektors 19 in einem User Interface einer Maschinensteuerung 44 eingegeben werden. Beispielsweise kann die Masse 18 des Endeffektors 19 ermittelt werden, indem ein Drehmoment 46 einer Achse 12 ausgewertet wird. Auch denkbar ist, dass die Masse 18 des Endeffektors 19 zunächst eingegeben und die eigegebene Masse 18 im Anschluss überprüft wird.

Die Maschinensteuerung 44 kann Teil der Maschine und/oder des Achsensystems 10 sein. Weiter erfolgt eine Ermittlung wenigstens einer Istposition 26 der wenigstens einen Achse 12. Beispielweise kann die Ermittlung der Istposition 26 der wenigstens einen Achse 12 mit Hilfe eines Umrichters 42 erfolgen. Der Umrichter 42 kann Teil der Maschine und/oder des Achsensystems 10 sein.

Weiter wird wenigstens eine Eigenfrequenz 28 des Achsensystems 10 aus der wenigstens einen Istposition 26 der wenigstens einen Achse 12 und der Masse 18 des Endeffektors 19 mittels wenigstens einer Eigenfrequenzkennlinie 30 bestimmt.

Weiter erfolgt eine Generierung wenigstens einer Sollpositionstrajektorie 32 für die Bewegung des Endeffektors 19, beispielsweise mit einem Sollpositionsgenerator 34. Der Sollpositionsgenerator 34 kann z.B. Teil der Maschinensteuerung 44 sein. Die Sollposition kann automatisch vorgegeben und/oder eingegeben werden, beispielsweise in die Maschinensteuerung 44.

Weiter erfolgt eine Optimierung der wenigstens einen Sollpositionstrajektorie 32 mit der wenigstens einen Eigenfrequenz 28 des Achsensystems 10 in wenigstens eine optimierte Trajektorie 40 zur Bewegung des Antriebs entlang der wenigstens einen optimierten Trajektorie 40, wobei die Optimierung mittels eines Trajektorienoptimierers 38 erfolgen kann.

Der Trajektorienoptimierer 38, die Masseermittlung/-eingabe 20 und/oder der Sollpositionsgenerator 34 können Teil der Maschinensteuerung 44 sein. Bevorzugt kann die Eigenfrequenzkennlinie 30 in der Maschinensteuerung 44 hinterlegt werden. Bevorzugt kann in einem Steuerungstakt, z.B. jede Millisekunde vom Sollpositionsgenerator 34 eine Sollposition an den Trajektorienoptimierer 38 weitergegeben werden. Die Sollposition über der Zeit dargestellt ergibt die Sollpositionstrajektorie 32, welche mittels des Trajektorienoptimierers 38 zu einer optimierten Trajektorie 40 optimiert wird. Vorteilhaft ergibt sich so ein schnelles, schwingungsarmes, sicheres und verlässliches Verfahren zum Bewegen wenigstens eines Endeffektors 19.

In einem bevorzugten Ausführungsbeispiel kann die Eigenfrequenzkennlinie 30 hinterlegt werden, aus der je nach Masse 18 des Endeffektors 19 und der Istposition 26 die Eigenfrequenz 28 der entsprechenden Achse 12 bestimmt werden kann. Beispielsweise kann die Eigenfrequenzkennlinie 30 in der Maschinensteuerung 44 hinterlegt werden.

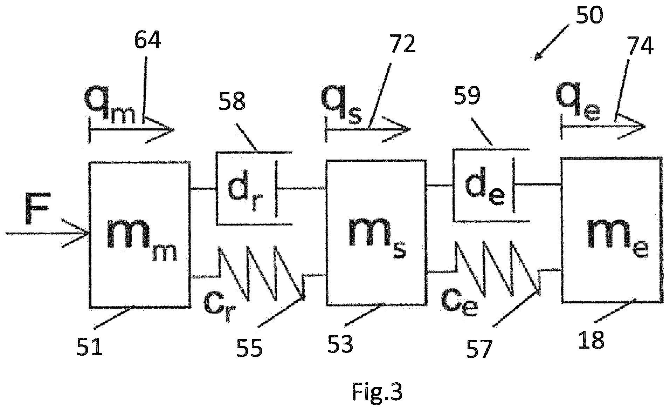

In einem weiteren bevorzugten Ausführungsbeispiel gemäß Figur 3 wird das Achsensystem 10 als ein lineares Feder-Masse-Dämpfer-System 50 modelliert. Beispielsweise kann das schwingungsfähige System der X-, Y- und/oder Z-Achse jeweils als lineares Feder-Masse-Dämpfer-System 50 modelliert werden. Messdaten zeigen, dass damit die wesentlichen Freiheitsgrade abgebildet werden können. Das Feder-Masse-Dämpfer-System 50 in Figur 3 kann beispielsweise über drei Differentialgleichungen zweiter Ordnung abgebildet werden. Dabei entspricht $q_m$ der Position 64 des Antriebs, $q_e$ der Position 74 des Endeffektors 19 und $q_s$ der Position 72 des Schlittens. $\dot{q}_m$, $\dot{q}_s$ und $\dot{q}_e$ bzw. $\ddot{q}_m$, $\ddot{q}_s$ und $\ddot{q}_e$ stellen entsprechend die Geschwindigkeiten bzw. die Beschleunigungen und F die Antriebskraft dar. $c_r$, $d_r$, $c_e$ und $d_e$ stellen entsprechende Faktoren 55, 58, 57 und 59, z.B. Kontanten, des Feder-Masse-Dämpfer-Systems 50 dar. $m_m$, $m_s$ und $m_e$ entsprechen der Masse 51 des Antriebs, der Masse 53 des Schlittens und der Endeffektormasse 18.

In einem weiteren bevorzugten Ausführungsbeispiel wird für eine Systemdarstellung wenigstens eine Zustandsraumdarstellung verwendet. Die drei Differentialgleichungen zweiter Ordnung des Feder-Masse-Dämpfer-Systems 50 können dazu beispielsweise in sechs Differentialgleichungen erster Ordnung überführt und in folgende Form gebracht werden:

$$\dot{x} = Ax + bF \qquad\qquad \text{(Formel 1)}$$

Dabei bezeichnet 4 die Transitionsmatrix und $b$ den Eingangsvektor.

Der Zustandsvektor für das in Figur 3 angegebene Feder-Masse-Dämpfer-System 50 kann beispielsweise folgendermaßen aussehen: $x = [q_m, \dot{q}_m, q_s, \dot{q}_s, q_e, \dot{q}_e]^{\mathsf{T}}$

Für die Systemordnung n kann die Steuerbarkeitsmatrix nach Kalman wie folgt angegeben werden:

$$Q = [b, Ab, \dots, A^{n-1}b] \qquad\qquad \text{(Formel 2)}$$

In einem weiteren bevorzugten Ausführungsbeispiel wird für die Optimierung der wenigstens einen Sollpositionstrajektorie 32 wenigstens eine Zustandstransformation durchgeführt. Da bevorzugt das Feder-Masse-Dämpfer-System 50 entsprechend Formel 1 linear und zustandssteuerbar ist ($Q$ hat vollen Rang), kann es vorteilhaft in ein äquivalentes System transformiert werden, dessen neue Zustände $\tilde{x}$ eine Integratorkette bilden. Die Transformation kann z.B. über die letzte Zeile der inversen Steuerbarkeitsmatrix angegeben werden:

$$t^T = [0,...,0,1]Q^{-1}, \quad T = \begin{bmatrix} t^T \\ t^T A \\ \vdots \\ t^T A^{n-1} \end{bmatrix}, \quad x = T^{-1}\tilde{x} \qquad \text{(Formel 3)}$$

Über den neuen Zustand $\tilde{x}_1$, der am Ende der Integratorkette $\tilde{x}$ steht, können alle Zustände x differentiell parametriert werden. Der transformierte Zustand $\tilde{x}_1$ am Ende der Integratorkette kann außerdem bevorzugt so skaliert werden, dass die niedrigste Ableitung von $\tilde{x}_1$ im Zustand $x_i$ ohne Faktor auftritt. Das ist vorteilhaft für die Trajektorienplanung, da somit die Start- und Endwerte der Trajektorien in beiden Koordinatensystemen übereinstimmen, sobald die höheren Ableitungen verschwinden. Für das Feder-Masse-Dämpfer-System 50 und unter Vernachlässigung der Dämpfung von Riemen und Endeffektor kann der neue Zustand $\tilde{x}_1$ am Ende der Integratorkette mittels eines Skalierungsfaktors gleich der Endeffektorposition gewählt werden:

$$\tilde{x}_1 = x_5 = q_e \qquad \text{(Formel 4)}$$

Formel 3 und 4 erlauben es, Sollpositionstrajektorien für den Antrieb zu erhalten wenn für den Endeffektor $n$ - 1 mal stetig differenzierbare Sollpositionstrajektorien vorgegeben werden.

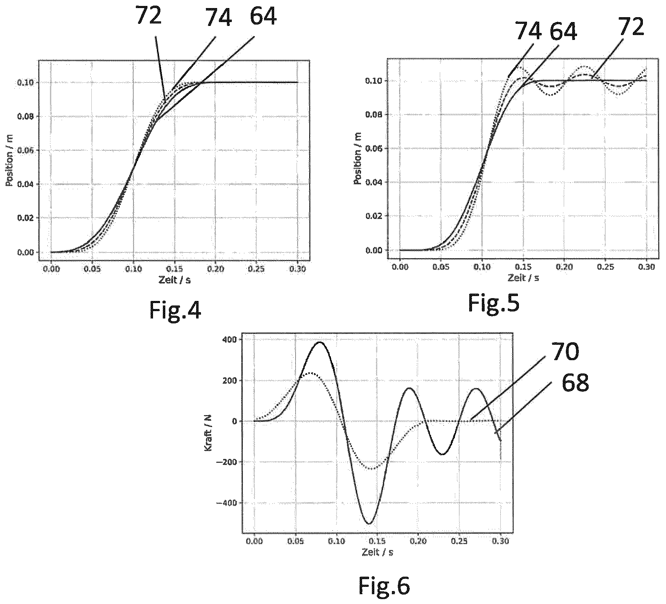

Die Fig. 4 - 6 zeigen Diagramme einer entsprechenden Simulation. Dabei entspricht $q_m$ der Position des Antriebs 64, $q_e$ der Position des Endeffektors 74 und $q_s$ der Position des Schlittens 72. In den Figuren 4 und 5 sind die Positionen des Antriebs 64 (durchgezogene Linie), des Schlittens 72 (gestrichelte Linie) und des Endeffektors 74 (gepunktete Linie) über der Zeit aufgetragen. Die Position des Antriebs 64 in Fig. 4 und in Fig. 5 hat nicht die gleiche Form. In Figur 4 ist die Position des Antriebs 64 bzgl. der optimierten Trajektorie 40 dargestellt, während in Figur 5 die Position des Antriebs 64 bzgl. der Sollpositionstrajektorie 32 bzw. der nicht optimierten Trajektorie dargestellt ist. Dabei wurde in Figur 4 für $q_e$ ein Polynom 11. Grades vorgegeben und die Trajektorie für $q_m$ mittels Formel 3 und 4 bestimmt. In Figur 5 ist zum Vergleich auch der Fall abgebildet, in dem für $q_m$ direkt ein Polynom 11. Grades vorgegeben wurde. In Figur 6 ist der Kraftverlauf 68 für die Sollpositionstrajektorie 32 bzw. die nicht optimierte Trajektorie (durchgezogene Linie) und der Kraftverlauf 70 für die optimierte Trajektorie 40 (gepunktete Linie) über der Zeit aufgetragen. Der Kraftverlauf 68 in Fig. 6 zeigt die Kraft, die der Antrieb aufbringen muss, wenn er sich entlang der Sollpositionstrajektorie 32 bzw. der nicht optimierten Trajektorie bewegt. Der Kraftverlauf 70 in Fig. 6 zeigt die Kraft, die der Antrieb aufbringen muss, wenn er sich entlang der optimierten Trajektorie 40 bewegt.

In einem weiteren bevorzugten Ausführungsbeispiel wird für das Achsensystem 10 wenigstens ein Systemparameter ermittelt. Beispielsweise können die Systemparameter aus Datenblättern bekannt sein oder können z.B. an einem Roboter in Versuchen ermittelt und bevorzugt in Kennlinien abgelegt und/oder online identifiziert werden. Beispielsweise kann für eine Endeffektorschwingung die Periodendauer T als Funktion einer Tauchachsposition y und der schwingenden Masse $m_e$ des Endeffektors 19 dargestellt werden: $T = f(y,m_e)$.

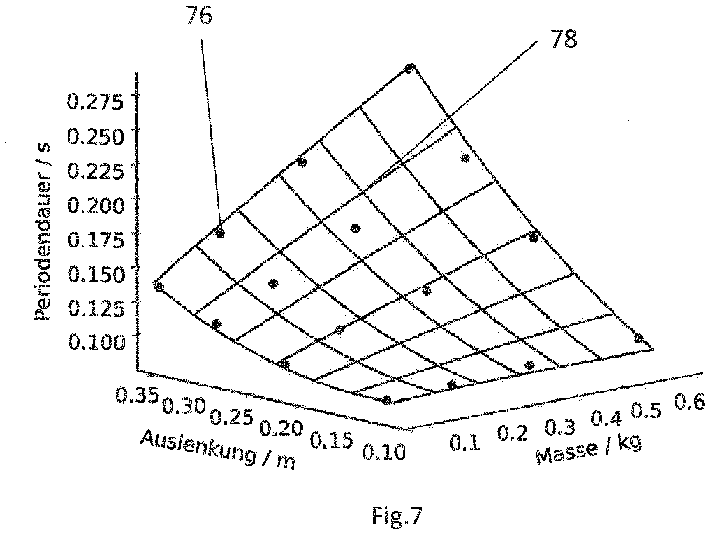

Figur 7 zeigt wie sich die Periodendauer der niedrigsten Eigenschwingung verhält wenn man die Masse oder die Achs-Auslenkung verändert. Da die Periode den Kehrwert der Frequenz darstellt kann dies als die Eigenfrequenzkennlinie 30 bezeichnet werden. In Figur 7 ist eine interpolierende Funktion als ein Paraboloid 78 für entsprechende Messwerte 76 dargestellt. Die Messwerte 76 können beispielsweise ermittelt werden, indem, nach Anregung, die Periodendauer für verschiedene Gewichte und Achspositionen aus dem Positionssignal des Schlittens gemessen wird. Ebenfalls kann die Periodendauer der Riemenschwingung, ähnlich wie die Periodendauer der Endeffektorschwingung, in einer Kennlinie ablegt werden. Hier ist statt der Tauchachsposition die Schlittenposition ausschlaggebend. Formel 3 kann dann beispielsweise über den Zusammenhang $\dfrac{m}{c} = \dfrac{T^2}{4\pi^2}$, mit Hilfe der Periodendauer-Kennlinie parametriert werden.

In einem weiteren bevorzugten Ausführungsbeispiel werden für die Ermittlung der wenigstens einen Istposition 26 der Achse 12 und/oder der Masse 18 des Endeffektors 19 Daten aus dem Umrichter 42 des Achsensystems 10 verwendet. Dadurch ergibt sich vorteilhaft ein einfacher und kompakter Aufbau, da keine weiteren Sensoren zur Ermittlung verwendet werden müssen.

In einem weiteren bevorzugten Ausführungsbeispiel wird die Masse 18 des Endeffektors 19 aus wenigstens einem Drehmoment 46, z.B. dem X-, Y- und/oder Z-Drehmoment der Achse 12 ermittelt.

Die hinsichtlich des Verfahrens angeführten Vorteile stellen sich auch bei einer Maschinensteuerung beispielweise für eine Maschine zur Handhabung und/oder Verarbeitung plastifizierbarer Materialien, z.B. für eine Spritzgießmaschine oder für eine Formgebungsmaschine ein, sofern die Maschinensteuerung eingerichtet, ausgeführt und/konstruiert ist, um das Verfahren entsprechend auszuführen.

Ebenso stellen sich die verfahrensgemäßen Vorteile bei der Verwendung eines Computerprogrammprodukts mit einem Programmcode ein, der auf einem Computer lesbaren Medium gespeichert ist, sodass das Verfahren unter Verwendung des Programmcodes durchgeführt werden kann.

**Bezugszeichenliste**

| | | | |
|---|---|---|---|
| 10 | Achsensystem | 51 | Masse |
| 12 | Achse | 52 | Torsion |
| 18 | Masse des Endeffektors | 53 | Masse |
| 19 | Endeffektor | 54 | Abweichung |
| 20 | Masseermittlung/-eingabe | 55 | Faktor |
| 26 | Istposition | 56 | Abweichung |
| 28 | Eigenfrequenz | 57 | Faktor |
| 30 | Eigenfrequenzkennlinie | 58 | Faktor |
| 32 | Sollpositionstrajektorie | 59 | Faktor |
| 34 | Sollpositionsgenerator | 64 | Position Antrieb |
| 38 | Trajektorienoptimierer | 68 | Kraftverlauf nicht-optimiert |
| 40 | optimierte Trajektorie | 70 | Kraftverlauf optimiert |
| 42 | Umrichter | 72 | Position Schlitten |
| 44 | Maschinensteuerung | 74 | Position Endeffektor |
| 46 | Drehmoment | 76 | Messwert |
| 48 | Richtung | 78 | Paraboloid |
| 50 | Feder-Masse-Dämpfer-System | | |

**Patentansprüche**

1. Verfahren zum Bewegen wenigstens eines Endeffektors (19) eines Achsensystems (10) mit wenigstens einer Achse (12) und wenigstens einem Antrieb, insbesondere einer Pick-and-Place-Vorrichtung oder eines Linearroboters, bevorzugt einer Pick-and-Place-Vorrichtung oder eines Linearroboters für eine Maschine zur Handhabung und/oder Verarbeitung plastifizierbarer Materialien, insbesondere für eine Spritzgießmaschine oder für eine Formgebungsmaschine, mit den Schritten:

   - Ermittlung und/oder Eingabe der Masse (18) des Endeffektors (19),
   - Ermittlung wenigstens einer Istposition (26) der wenigstens einen Achse (12),
   - Bestimmung wenigstens einer Eigenfrequenz (28) des Achsensystems (10) aus der wenigstens einen Istposition (26) der wenigstens einen Achse (12) und der Masse (18) des Endeffektors (19) mittels wenigstens einer Eigenfrequenzkennlinie (30),
   - Generierung wenigstens einer Sollpositionstrajektorie (32) für die Bewegung des Endeffektors (19),
   - Optimierung der wenigstens einen Sollpositionstrajektorie (32) mit der wenigstens einen Eigenfrequenz (28) des Achsensystems (10) in wenigstens eine optimierte Trajektorie (40) zur Bewegung des Antriebs entlang der wenigstens einen optimierten Trajektorie (40).

2. Verfahren nach Anspruch 1, **dadurch gekennzeichnet, dass** die wenigstens eine Eigenfrequenzkennlinie (30) hinterlegt wird.

3. Verfahren nach einem der vorhergehenden Ansprüche, **dadurch gekennzeichnet, dass** das Achsensystem (10) als ein lineares Feder-Masse-Dämpfer-System (50) modelliert wird.

4. Verfahren nach Anspruch 3, **dadurch gekennzeichnet, dass** für eine Systemdarstellung wenigstens eine Zustandsraumdarstellung verwendet wird.

5. Verfahren nach einem der vorhergehenden Ansprüche, **dadurch gekennzeichnet, dass** für die Optimierung der wenigstens einen Sollpositionstrajektorie (32) wenigstens eine Zustandstransformation durchgeführt wird.

6. Verfahren nach einem der vorhergehenden Ansprüche, **dadurch gekennzeichnet, dass** für die Optimierung der wenigstens einen Sollpositionstrajektorie (32) Koordinaten des Endeffektors (19) in Koordinaten des Antriebs umgerechnet werden.

7. Verfahren nach einem der vorhergehenden Ansprüche, **dadurch gekennzeichnet, dass** für die Optimierung der wenigstens einen Sollpositionstrajektorie (32) wenigstens eine Riemendynamik des Antriebs berücksichtigt wird.

8. Verfahren nach einem der vorhergehenden Ansprüche, **dadurch gekennzeichnet, dass** für das Achsensystem (10) wenigstens ein Systemparameter ermittelt wird.

9. Verfahren nach einem der vorhergehenden Ansprüche, **dadurch gekennzeichnet, dass** für die Ermittlung der wenigstens einen Istposition (26) der wenigstens einen Achse (12) und/oder der Masse (18) des Endeffektors (19) Daten aus einem Umrichter (42) des Achsensystems (10) verwendet werden.

10. Verfahren nach einem der vorhergehenden Ansprüche, **dadurch gekennzeichnet, dass** die Masse (18) des Endeffektors (19) aus wenigstens einem Drehmoment (46) der wenigstens einen Achse (12) ermittelt wird.

11. Maschinensteuerung (44), eingerichtet, ausgeführt und/oder konstruiert, um das Verfahren nach einem der Ansprüche 1 bis 10 auszuführen.

12. Computerprogrammprodukt mit einem Programmcode, der auf einem Computer lesbaren Medium gespeichert ist, zur Durchführung des Verfahrens nach einem der Ansprüche 1 bis 10.

Fig.1

Fig.2

Fig.3

Fig.5

Fig.4

Fig.6

Fig.7

Europäisches
Patentamt

European
Patent Office

Office européen
des brevets

# EUROPÄISCHER RECHERCHENBERICHT

**Nummer der Anmeldung**

EP 23 20 6350

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JP 4 367041 B2 (FUJI ELEC FA COMPONENTS & SYS) 18. November 2009 (2009-11-18) * Abbildungen 1-4 * * Anspruch 1 * * Absätze [0004], [0008], [0011] * * Absatz [0038] – Absatz [0045] * ----- | 1-12 | INV. B25J9/16 G05B19/404 |
| Y | DE 11 2017 003961 B4 (MITSUBISHI ELECTRIC CORP [JP]) 9. Juni 2022 (2022-06-09) * Abbildungen 1,2 * * Ansprüche 1-5 * ----- | 1-12 | |
| A | DE 10 2016 000265 A1 (FANUC CORP [JP]) 21. Juli 2016 (2016-07-21) * Abbildungen 1-8 * * Ansprüche 1-5 * ----- | 1-12 | |

**RECHERCHIERTE SACHGEBIETE (IPC)**

B25J
G05B

Der vorliegende Recherchenbericht wurde für alle Patentansprüche erstellt

| Recherchenort | Abschlußdatum der Recherche | Prüfer |
|---|---|---|
| Den Haag | 19. März 2024 | Lorenzo Barreiro, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 20 6350

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-03-2024

| Im Recherchenbericht angeführtes Patentdokument | Datum der Veröffentlichung | Mitglied(er) der Patentfamilie | Datum der Veröffentlichung |
|---|---|---|---|
| JP 4367041 B2 | 18-11-2009 | JP 4367041 B2 | 18-11-2009 |
| | | JP 2005038311 A | 10-02-2005 |
| DE 112017003961 B4 | 09-06-2022 | CN 109562518 A | 02-04-2019 |
| | | DE 112017003961 T5 | 25-04-2019 |
| | | JP 6545390 B2 | 17-07-2019 |
| | | JP WO2018029910 A1 | 08-11-2018 |
| | | US 2019384233 A1 | 19-12-2019 |
| | | WO 2018029910 A1 | 15-02-2018 |
| DE 102016000265 A1 | 21-07-2016 | CN 105811817 A | 27-07-2016 |
| | | DE 102016000265 A1 | 21-07-2016 |
| | | JP 6017595 B2 | 02-11-2016 |
| | | JP 2016134975 A | 25-07-2016 |
| | | US 2016209829 A1 | 21-07-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009040434 B4
- DE 102004008406 A1
- DE 102017129467 A1
- DE 102017124182 A1
- DE 112017003961 B4
- DE 102016000265 A1
- EP 0931283 B1
- US 20140300411 A1